# EUROPÄISCHE PATENTSCHRIFT

(11) **EP 1 264 092 B1**
(45) Veröffentlichungstag und Bekanntmachung des Hinweises auf die Patenterteilung: **26.03.2008**
(21) Anmeldenummer: 01919149.3
(22) Anmeldetag: 01.03.2001
(51) Int. Cl.: F02D 1/00

(54) **VERFAHREN ZUR STEUERUNG VON VERBRENNUNGEN IN EINEM UNBELASTETEN VERBRENNUNGSMOTOR**
METHOD FOR CONTROLLING COMBUSTION PROCESSES IN AN OFF-LOAD INTERNAL COMBUSTION ENGINE
PROCEDE DE COMMANDE DE LA COMBUSTION DANS UN MOTEUR A COMBUSTION INTERNE NON EN CHARGE

(30) Priorität: 09.03.2000 DE 10011415
(43) Veröffentlichungstag der Anmeldung: 11.12.2002
(73) Patentinhaber: ROBERT BOSCH GMBH, 70442 Stuttgart (DE)
(72) Erfinder: FRANKE, Steffen, 71701 Schwieberdingen (DE); UNLAND, Stefan, 71665 Vaihingen-Kleinglattbach (DE); SURJADI, Iwan, 71665 Vaihingen (DE); PRAUSE, Carsten, 71640 Ludwigsburg-Ossweil (DE)
(86) Internationale Anmeldenummer: PCT/DE2001/000769
(87) Internationale Veröffentlichungsnummer: WO 2001/066923

(56) Entgegenhaltungen:
- DE-A- 4 021 440
- US-A- 4 336 778
- US-A- 4 552 109
- US-A- 5 373 821
- PATENT ABSTRACTS OF JAPAN vol. 014, no. 300 (M-0991), 28. Juni 1990 (1990-06-28) & JP 02 095775 A (SUZUKI MOTOR CO LTD), 6. April 1990 (1990-04-06)
- PATENT ABSTRACTS OF JAPAN vol. 1995, no. 11, 26. Dezember 1995 (1995-12-26) & JP 07 224707 A (MAZDA MOTOR CORP), 22. August 1995 (1995-08-22)

## Beschreibung

Die Erfindung betrifft ein Verfahren zur Steuerung von Verbrennungen in einem unbelasteten Verbrennungsmotor eines Fahrzeugs, entsprechend dem einleitenden Teil des Anspruchs 1.

### Stand der Technik

Ein unbelasteter Betriebszustand eines Verbrennungsmotors kann dann vorliegen, wenn am Fahrzeug kein Gang eingelegt ist oder die Kupplung geöffnet ist oder die Fahrzeuggeschwindigkeit gleich Null ist. Dabei ist es möglich, dass sich bei nahezu lastlosem Hochdrehen des unbelasteten Verbrennungsmotors eine sehr große Last- und Drehzahldynamik einstellt. Aufgrund dieser vergrößerten Last- und Drehzahldynamik unterliegt der Verbrennungsmotor im unbelasteten Betriebszustand einer erhöhten Neigung zu klopfenden Verbrennungen. Diese klopfende Verbrennungen während eines unbelasteten Betriebszustands eines Verbrennungsmotors, welche auch als Nullast-Gasstoß bezeichnet werden, sind jedoch nachteilhaft, insbesondere weil eine effektive und zuverlässige Klopfregelung aufgrund der vorliegenden erhöhten Dynamik (Last- und Drehzahldynamik) erschwert wird. Ferner wirken klopfende Verbrennungen insbesondere bei einem unbelasteten Betriebszustand eines Verbrennungsmotors nachteilhaft auf den Fahrkomfort, da sie in diesem Betriebszustand leicht akustisch erfassbar sind und als störend empfunden werden.

Ein Beispiel einer Drehzahlregelung im umbelasteten Betriebzustand ist in US 5 373 821 zu finden.

### Vorteile der Erfindung

Das erfindungsgemäße Verfahren zur Steuerung von Verbrennungen in einem unbelasteten Verbrennungsmotor eines Fahrzeugs ist durch folgende Verfahrensschritte gekennzeichnet:
- Bestimmen einer Lastdynamikschwelle;
- Feststellen eines unbelasteten Betriebszustands des Verbrennungsmotors;
- Feststellen eines Überschreitens der Lastdynamikschwelle im unbelasteten Betriebszustand;
- Spätverstellen des Zündwinkels unter Ausbildung eines Lastdynamikvorhalts.

Hierdurch kann in zuverlässiger und effektiver Weise das Auftreten einer Mehrzahl an klopfenden Verbrennungen aufgrund der sich im unbelasteten Betriebszustand einstellenden, erhöhten Last- und Drehzahldynamik verhindert werden. Der im unbelasteten Betriebszustand einzustellende Lastdynamikvorhalt ist aufgrund der erhöhten Klopfneigung größer als bei einer im belasteten Fahrbetrieb, das heißt bei eingelegtem Gang und geschlossener Kupplung, ausgelösten Last- und Drehzahldynamik. Durch die Bestimmung einer Lastdynamikschwelle kann in präziser und sicherer Weise ein Betriebszustand mit erhöhter Klopfneigung definiert werden. Ein unbelasteter Betrieb des Verbrennungsmotors kann derart festgestellt werden, dass kein Gang eingelegt ist oder die Kupplung geöffnet ist (durchgetretenes Kupplungspedal) oder die Fahrzeuggeschwindigkeit gleich Null ist. Es ist somit in zuverlässiger und schneller Weise möglich, einen sogenannten "tip-in"-Betriebszustand festzustellen, gemäß welchem der Verbrennungsmotor im unbelasteten Betriebszustand lastlos beziehungsweise nahezu lastlos hochdreht, wobei aufgrund einer sich gleichzeitig einstellenden, erhöhten Last- und Drehzahldynamik die Wahrscheinlichkeit einer auftretenden, nachteilhaften klopfenden Verbrennung zunimmt. Nach Feststellen dieser in Bezug auf die Klopfneigung kritischen Betriebssituation ist es vorteilhafterweise möglich, durch Herstellen eines ausreichenden Lastdynamikvorhalts mittels einer entsprechenden Spätverstellung des Zündwinkels eine klopfende Verbrennung im Verbrennungsmotor zu verhindern oder zumindest auf möglichst wenige Verbrennungen zu beschränken.

Vorteilhafterweise werden zum Feststellen eines unbelasteten Betriebszustands und einer wenigstens nahezu lastlosen Drehzahlerhöhung des Verbrennungsmotors als Betriebsparameter die Last- und Motordrehzahl herangezogen. Die Last- und Motordrehzahl bieten sich besonders als Betriebsparameter zur Feststellung eines "tip-in"-Betriebszustands an, gemäß welchem im ausgekuppeltenzustand oder bei nicht eingelegtem Gang oder einer Fahrzeuggeschwindigkeit gleich Null ein lastloses beziehungsweise nahezu lastloses Hochdrehen des Verbrennungsmotors, gegebenenfalls mit Überschreitung der Lastdynamikschwelle, erfolgt. Dabei können die Last- und Motordrehzahl in besonders einfacher und präziser Weise ermittelt werden.

Gemäß einer ersten Ausführungsvariante wird der Zündwinkel-Spätverstellungswert aus einem motordrehzahlabhängigen Spätverstellungswert gebildet. Ein in Abhängigkeit der jeweiligen Motordrehzahl gebildeter Spätverstellungswert eignet sich besonders, um einen ausreichenden Lastdynamikvorhalt bei einem "tip-in"-Betriebszustand zu gewährleisten.

Entsprechend einer zweiten, alternativen Ausführungsvariante wird der Zündwinkel-Spätverstellungswert aus der Summe eines adaptiven Spätverstellungswerts und eines motordrehzahlabhängigen Spätverstellungswerts gebildet. In dieser Weise wird der notwendige Lastdynamikvorhalt aus einer adaptiven Komponente und einer drehzahlabhängigen Komponente gebildet. Hierbei ist der Wert des adaptiven Lastdynamikvorhalts bekannt, während der Wert des drehzahlabhängigen Lastdynamikvorhalts in Abhängigkeit der jeweiligen, im unbelasteten Betriebszustand vorliegenden Motordrehzahl bestimmt wird.

Mit Vorteil wird während der Spätverstellung des Zündwinkels eine Klopfregeldynamikadaption deaktiviert. Hierdurch kann insbesondere wahlweise verhindert werden, dass die ansonsten aktivierte Klopfregeldynamikadaption die für belastete Betriebszustände ermittelten und gespeicherten, adaptieren Werte insbesondere aufgrund des eingestellten drehzahlabhängigen Lastdynamikvorhalts verlernt. Dies ermöglicht eine erhebliche Verbesserung des Anfahrverhaltens des entsprechenden Fahrzeugs nach Beendigung des unbelasteten Betriebszustands.

Vorteilhafterweise erfolgt die Spätverstellung des Zündwinkels unterhalb einer festlegbaren Fahrzeuggeschwindigkeitsschwelle. Hierbei werden insbesondere bei niedrigeren Fahrzeuggeschwindigkeiten verhältnismäßig leicht von einem Fahrzeugbenutzer hörbare beziehungsweise feststellbare und somit sich nachteilhaft auf den Fahrkomfort auswirkende dynamische, klopfende Verbrennungen im unbelasteten Betriebszustand des Verbrennungsmotors vermieden.

Mit Vorteil ist vorgesehen, dass die Lastdynamikschwelle mittels einer Steuervorrichtung bestimmt wird oder in dieser gespeichert ist, der unbelastete Betriebszustand des Verbrennungsmotors und das Überschreiten der Lastdynamikschwelle im unbelasteten Betriebszustand mittels einer Erfassungseinheit festgestellt wird und der Zündwinkel unter Ausbildung eines Lastdynamikvorhalts mittels einer Zündwinkelverstellungseinheit spätverstellt wird. Dies ermöglicht in zuverlässiger und schneller Weise wenigstens eine Reduzierung von klopfenden Verbrennungen während eines "tip-in"-Betriebszustands des Verbrennungsmotors.

Weitere vorteilhafte Ausgestaltungen der Erfindung ergeben sich aus der Beschreibung.

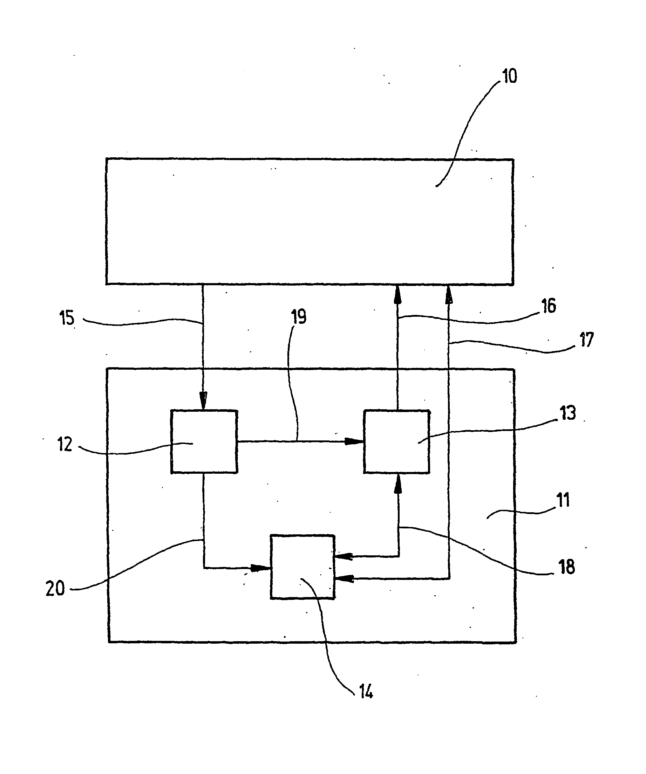

Zeichnung Die Figur wird nachfolgend in einem Ausführungsbeispiel anhand einer zugehörigen Zeichnung näher erläutert. Dabei zeigt die Figur ein Blockschaltbild mit einer Steuervorrichtung zur Steuerung von Verbrennungen in einem unbelasteten Verbrennungsmotor.

### Beschreibung der Erfindung

Die Figur zeigt in schematischer Darstellung einen Verbrennungsmotor 10 eines Fahrzeugs (nicht dargestellt), der mit einer Steuervorrichtung 11 in operativer Wirkverbindung steht. Die Steuervorrichtung 11 weist eine Erfassungseinheit 12 zum Feststellen eines sogenannten "tip-in"-Betriebszustands, eine Zündwinkelverstellungseinheit 13 und eine Klopfregeldynamikadaptionseinheit 14 auf. Unter einem "tip-in"-Betriebszustand wird ein unbelasteter Betriebszustand des Verbrennungsmotors 10 verstanden, bei welchem aufgrund einer sich einstellenden, erhöhten Last- und Drehzahldynamik die Wahrscheinlichkeit einer auftretenden, nachteilhaften klopfenden Verbrennung zunimmt. Der Verbrennungsmotor 10 ist mittels einer als Pfeil 15 dargestellten Datenübertragungsleitung mit der Erfassungseinheit 12 verbunden, welche ihrerseits mittels als Pfeile 19, 20 dargestellte Steuerleitungen mit der Zündwinkelverstellungseinheit 13 und der Klopfregeldynamikadaptionseinheit 14 operativ verbunden ist. Die Zündwinkelverstellungseinheit 13 ist mittels der als Doppelpfeil 18 dargestellten Steuerleitung mit der Klopfregeldynamikadaptionseinheit 14 verbunden. Die beiden Einheiten 13, 14 stehen ferner mit dem Verbrennungsmotor 10 mittels als Pfeile 16, 17 dargestellten Steuerleitungen in operativer Wirkverbindung.

Die Erfassungseinheit 12 dient zum Feststellen eines unbelasteten Betriebszustands des Verbrennungsmotors 10 sowie eines Überschreitens einer Lastdynamikschwelle im unbelasteten Betriebszustand. Dabei dient als Betriebsparameter die Motordrehzahl des Verbrennungsmotors 10. Wenn ein "tip-in"-Betriebszustand durch die Erfassungseinheit 12 festgestellt worden ist, übermittelt sie durch die als Pfeil 19 dargestellte Steuerleitung an die Zündwinkelverstellungseinheit 13 ein entsprechendes Signal. Gleichzeitig wird von der Erfassungseinheit 12 durch die als Pfeil 20 dargestellte Steuerleitung an die Klopfregeldynamikadaptionseinheit 14 ein Deaktivierungssignal übermittelt, um letztere während des festgestellten "tip-in"-Betriebszustands zu sperren und somit zeitweise außer Betrieb zu setzen. Die Zündwinkelverstellungseinheit 13 berechnet einen motordrehzahlabhängigen Spätverstellungswert, mittels welchem ein eine klopfende Verbrennung verhindernder Lastdynamikvorhalt erhalten werden kann. Dieser Zündwinkel-Spätverstellungswert wird mittels der als Pfeil 16 dargestellten Steuerleitung am Verbrennungsmotor 10 eingestellt. Hierdurch wird im unbelasteten Betriebszustand aufgrund des erzeugten Lastdynamikvorhalts durch die Zündwinkelverstellungseinheit 13 eine klopfende Verbrennung im Verbrennungsmotor 10 verhindert beziehungsweise auf erste Einzelverbrennungen beschränkt. Während des festgestellten "tip-in"-Betriebszustands ist die Klopfregeldynamikadaptionseinheit 14 deaktiviert, so dass keine Datenbeziehungsweise Signalübertragung durch die als Pfeile 17, 18 dargestellten Steuerleitungen stattfindet.

Gemäß einer weiteren, alternativen Ausführungsvariante kann der Zündwinkel-Spätverstellungswert mittels der Zündwinkelverstellungseinheit 13 aus der Summe eines adaptiven Spätverstellungswerts und eines motordrehzahlabhängigen Spätverstellungswerts gebildet werden. Dabei wird der adaptive Spätverstellungswert von der Klopfregeldynamikadaptionseinheit 14 durch die als Doppelpfeil 18 dargestellte Steuerleitung an die Zündwinkelverstellungseinheit 13 übermittelt. Dieser adaptive Spätverstellungswert ist ein in der Klopfregeldynamikadaptionseinheit 14 gespeicherter Zündwinkel-Spätverstellungswert. Dabei wird dieser gespeicherte Wert während des "tip-in" -Betriebszustands nicht geändert beziehungsweise angepasst, da die Klopfregeldynamikadaptionseinheit 14 auch gemäß dieser alternativen Ausführungsvariante während des "tip-in"-Betriebszustands deaktiviert bleibt, so dass auch keine angepassten Daten beziehungsweise Signale durch die als Pfeil dargestellte Steuerleitung 17 an den Verbrennungsmotor 10 übertragen werden.

Die Deaktivierung der Klopfregeldynamikadaptionseinheit 14 während des "tip-in"-Betriebszustands dient dazu, ein Verlernen der in der Einheit 14 gespeicherten, adaptierten Werte zu verhindern. Nach Beendigung des "tip-in"-Betriebszustands wird die Klopfregeldynamikadaptionseinheit 14 durch die Erfassungseinheit 12 mittels der als Pfeil 20 dargestellten Steuerleitung 20 wieder in Betrieb gesetzt, um eine effektive und optimierte Klopfregelung im anschließenden Lastbetrieb des Verbrennungsmotors 10 zu gewährleisten. Gleichzeitig erfolgt eine entsprechende Normalverstellung des Zündwinkels durch die Zündwinkelverstellungseinheit 13.

Die Erfassungseinheit 12 ist geeignet, weitere betriebsspezifische Parameter zur Einleitung einer Spätverstellung des Zündwinkels im unbelasteten Betriebszustand zu erfassen. Ein derartiger, weiterer betriebsspezifischer Parameter kann beispielsweise die Fahrzeuggeschwindigkeit sein, wobei selbige unter einer festlegbaren Fahrzeuggeschwindigkeitsschwelle liegen soll, so dass eine Spätverstellung des Zündwinkels im unbelasteten Betriebszustand auf einen bestimmten, unteren Fahrzeuggeschwindigkeitsbereich beschränkt werden kann, in welchem klopfende Verbrennungen besonders störend auf den Fahrkomfort wirken.

Eine in dieser Weise ausgebildete beziehungsweise funktionierende Steuervorrichtung 11 ist vorteilhafterweise geeignet, bei einem "tip-in"-Betriebszustand in zuverlässiger und präziser Weise nachteilhafte klopfende Verbrennungen zu vermeiden oder wenigstens hinsichtlich ihrer Anzahl stark einzuschränken.

Der weitere konstruktive und funktionelle Aufbau der jeweiligen Einheiten der Steuervorrichtung 11 sind an sich bekannt und werden deshalb hier nicht näher im Detail beschrieben.

## Patentansprüche

1. Verfahren zur Steuerung von Verbrennungen in einem Verbrennungsmotor in einem Fahrzeug, mit den folgenden Verfahrensschritten:
- Feststellen eines unbelasteten Betriebszustands des Verbrennungsmotors, durch Feststellen eines ausgekuppelten Zustands oder eines nicht eingelegten Gangs oder einer Fahrzeuggeschwindigkeit gleich null;
- Feststellen eines Überschreitens einer Schwelle für die Lastdynamik im unbelasteten Betriebszustand;
- Spätverstellen des Zündwinkels derart, dass klopfende Verbrennungen verhindert bzw. auf erste Einzelverbrennungen beschränkt werden.

2. Verfahren nach Anspruch 1, **dadurch gekennzeichnet, dass** zum Feststellen eines unbelasteten Betriebszustands die Last und Motordrehzahl herangezogen werden.

3. Verfahren nach einem der vorhergehenden Ansprüche, **dadurch gekennzeichnet, dass** der Zündwinkel-Spätverstellungswert aus einem motordrehzahlabhängigen Spätverstellungswert gebildet wird.

4. Verfahren nach einem der vorhergehenden Ansprüche, **dadurch gekennzeichnet, dass** der Zündwinkel-Spätverstellungswert aus der Summe eines adaptiven Spätverstellungswerts und eines motordrehzahlabhängigen Spätverstellungswerts gebildet wird.

5. Verfahren nach einem der vorhergehenden Ansprüche, **dadurch gekennzeichnet, dass** während der Spätverstellung des Zündwinkels eine Klopfregeldynamikadaption deaktiviert wird.

6. Verfahren nach einem der vorhergehenden Ansprüche, **dadurch gekennzeichnet, dass** die Spätverstellung des Zündwinkels unterhalb einer festlegbaren Fahrzeuggeschwindigkeitsschwelle erfolgt.

7. Verfahren nach einem der vorhergehenden Ansprüche, **dadurch gekennzeichnet, dass** die Schwelle mittels einer Steuervorrichtung (11) bestimmt wird oder in dieser gespeichert ist, der unbelastete Betriebszustand des Verbrennungsmotors und das Überschreiten der Schwelle im unbelasteten Betriebszustand mittels einer Erfassungseinheit (12) festgestellt wird und der Zündwinkel mittels einer Zündwinkelverstellungseinheit (13) spätverstellt wird.

## Claims

1. Method for the control of combustions in an internal combustion engine in a vehicle, comprising the following method steps:
- detection of a non-loaded operating state of the internal combustion engine, by the detection of a disengaged state or of an unselected gear or of a vehicle speed being equal to zero;
- detection of an overshooting of a threshold for the load dynamics threshold in the non-loaded operating state;
- retardation of the ignition angle such that knocking combustion processes are prevented or restricted to initial, individual combustion processes.

2. Method according to Claim 1, **characterized in that** the load and the engine rotational speed are used in order to detect a non-loaded operating state.

3. Method according to one of the preceding claims, **characterized in that** the ignition-angle retardation value is formed from a retardation value dependent on the engine rotational speed.

4. Method according to one of the preceding claims, **characterized in that** the ignition-angle retardation value is formed from the sum of an adaptive retardation value and of a retardation value dependent on the engine rotational speed.

5. Method according to one of the preceding claims, **characterized in that**, during the retardation of the ignition angle, a knock-control dynamics adaptation is deactivated.

6. Method according to one of the preceding claims, **characterized in that** the retardation of the ignition angle takes place below a determinable vehicle speed threshold.

7. Method according to one of the preceding claims, **characterized in that** the threshold is determined by means of a control device (11) or is stored in the latter, the non-loaded operating state of the internal combustion engine and the overshooting of the threshold in the non-loaded operating state are detected by means of a detection unit (12), and the ignition angle is retarded by means of an ignition-angle adjustment unit (13).

## Revendications

1. Procédé de commande de combustion dans un moteur à combustion interne d'un véhicule comprenant les étapes de procédé suivantes :
- constatation d'un état de fonctionnement non en charge du moteur à combustion interne par la constatation d'un état débrayé ou d'un rapport de vitesses non passé ou encore d'une vitesse nulle du véhicule,
- constatation d'un dépassement d'un seuil pour la dynamique de charge à l'état de fonctionnement non en charge,
- réglage dans le sens du retard de l'angle d'allumage de façon à éviter les combustions avec cliquetis ou de les limiter aux premières combustions séparées.

2. Procédé selon la revendication 1,
**caractérisé en ce que**
pour constater un état de fonctionnement non en charge, on utilise la charge et la vitesse de rotation du moteur.

3. Procédé selon l'une des revendications précédentes,
**caractérisé en ce qu'**
on forme la valeur de réglage dans le sens du retard de l'angle d'allumage à partir de la valeur de réglage dans le sens du retard dépendant de la vitesse de rotation du moteur.

4. Procédé selon l'une des revendications précédentes,
**caractérisé en ce qu'**
on forme la valeur de réglage de l'angle d'allumage dans le sens du retard à partir de la somme d'une valeur adaptative du réglage du retard et d'une valeur de réglage du retard dépendant de la vitesse de rotation du moteur.

5. Procédé selon l'une des revendications précédentes,
**caractérisé en ce qu'**
on neutralise une adaptation de la dynamique de régulation du cliquetis pendant le réglage de l'angle d'allumage dans le sens du retard.

6. Procédé selon l'une des revendications précédentes,
**caractérisé en ce que**
le réglage dans le sens du retard de l'angle d'allumage se fait en dessous d'un seuil de vitesse fixé du véhicule.

7. Procédé selon l'une des revendications précédentes,
**caractérisé en ce qu'**
on définit le seuil à l'aide d'un dispositif de commande (11) ou on enregistre dans ce dispositif, l'état de fonctionnement non en charge du moteur à combustion interne et on constate le dépassement du seuil à l'état de fonctionnement non à charge à l'aide d'une unité de saisie (12) et on règle dans le sens du retard l'angle d'allumage à l'aide d'une unité de réglage de l'angle d'allumage (13).
